# EUROPEAN PATENT SPECIFICATION

(11) **EP 3 856 536 B1**
(45) Date of publication and mention of the grant of the patent: **13.12.2023**
(21) Application number: 18934548.1
(22) Date of filing: 28.09.2018
(51) Int. Cl.: B60C 11/00

(54) **A TIRE FOR MULTI PERFORMANCE**
REIFEN FÜR MEHRLEISTUNG
PNEUMATIQUE POUR PERFORMANCES MULTIPLES

(43) Date of publication of application: 04.08.2021
(73) Proprietor: COMPAGNIE GENERALE DES ETABLISSEMENTS MICHELIN, 63000 Clermont-Ferrand (FR)
(72) Inventor: UCHIDA, Tomotake, Tokyo 163-1073 (JP); MAESAKA, Masayuki, Tokyo 163-1073 (JP)
(74) Representative: M.F.P. Michelin
(86) International application number: PCT/JP2018/036176
(87) International publication number: WO 2020/065903

(56) References cited:
- DE-A1-102008 018 340
- FR-A1- 2 800 672
- JP-A- H0 640 213
- JP-A- 2000 118 206
- JP-A- 2000 264 015
- JP-A- 2007 051 169
- JP-A- 2012 035 823
- JP-A- 2013 052 756
- US-A1- 2016 016 435
- US-A1- 2016 059 631
- US-A1- 2018 154 696
- US-B1- 6 536 496

## Description

### Technical Field

The present invention relates to a tire, in particular to a tire able to perform better all over the year.

### Background Art

When driving on a wintry road surface such as snow and/or ice covered road surface, it is common to replace tires from a normal tire (a "summer" tire) to a tire suitable for driving on such the wintry road surface (a "winter" tire, a "studless" tire for example) for securing a safety.

Having two sets of tires, the normal tire and the winter tire increases the user's burden, such as securing a storage location and preparing extra wheels for the winter tire.

In order to satisfy a safety on both normal road surface and wintry road surface with one single tire, it is known to arrange different rubber compositions in axial orientation of a tread of a tire.

JPH03-025003 discloses a tire having a harder tread rubber on a center region of a tire harder than a shoulder region and a reinforcing layer with higher circumferential tensile stiffness on the shoulder region higher than the center region for satisfying high grip performance and high speed performance at the same time.

JP2001-047815 discloses a tire having a tread axially divided into several layers, and at least one layer is made of a rubber composition including water soluble resin for satisfying high level of ice braking performance and wet braking performance while maintaining stable driving performance on both normal road surface and wintry road surface.

WO2009/020065 discloses a tire having at least two belt layers of an angle from 15 to 40 degrees relative to a tire equator, a band layer of an angle less than or equal to 5 degrees relative to a circumferential orientation, a crown rubber portion provided with softer rubber composition in a center region and a shoulder rubber portion provided with harder rubber composition harder than that of the crown rubber portion in shoulder regions for satisfying comfort, handling and road noise performance at the same time. Other examples of tires are disclosed in JP 2007-51169, JP 2012-35823, US 2016/0059631, DE 10 2008 018340, US 6536496 and FR 2800672.

### Citation List

### Patent Literature

PTL 1: JPH03-025003
PTL 2: JP2001-047815
PTL 3: WO2009/020065

However with solutions disclosed in these documents, tire performance on both normal and wintry road surfaces are not satisfactory especially on wintry road surface, and there is a desire to further improvement of tire performance especially on wintry road surface while maintaining satisfactory performance on normal road surface.

Therefore, there is a need for a tire which provides satisfactory performance on both normal and wintry road surfaces at the same time.

### Definitions:

A "radial direction/orientation" is a direction/orientation perpendicular to axis of rotation of the tire. This direction/orientation corresponds to thickness orientation of the tread.

An "axial direction/orientation" is a direction/orientation parallel to axis of rotation of the tire.

A "circumferential direction/orientation" is a direction/orientation which is tangential to any circle centered on axis of rotation. This direction/orientation is perpendicular to both the axial direction/orientation and the radial direction/orientation.

A "tire" means all types of elastic tire whether or not subjected to an internal pressure.

A "tread" of a tire means a quantity of rubber material bounded by lateral surfaces and by two main surfaces one of which is intended to come into contact with ground when the tire is rolling.

A "groove" is a space between two rubber faces/sidewalls which do not contact between themselves under usual rolling condition connected by another rubber face/ bottom. A groove has a width and a depth.

A "contact patch" is a footprint of a tire mounted onto its standard rim as identified in tire standards such as ETRTO, JATMA or TRA, and inflated at its nominal pressure and under its nominal load.

It is thus an object of the invention to provide higher performance on both normal and wintry road surfaces at the same time.

### Summary of Invention

The present invention provides a tire comprising a tread, at least one carcass ply placed radially inward of the tread and at least one ply placed radially inbetween the tread and the at least one carcass ply, the tread having a contact face of a contact width CW intended to come into contact with ground during rolling, the tread being axially divided into 3 regions, 2 shoulder regions located axially outward of the tread being composed of a shoulder rubber composition and a center region axially sandwiched by the 2 shoulder regions being composed of a center rubber composition different than the shoulder rubber composition, a glass transition temperature Tg of the center rubber composition being higher than a glass transition temperature Tg of the shoulder rubber composition, the at least one ply comprises a plurality of reinforcing cords extending with an angle A in a range from 35 to 55 degrees relative to circumferential orientation, the glass transition temperature Tg of the center rubber composition is at least equal to 10°C higher than the glass transition temperature Tg of the shoulder rubber composition.

This arrangement provides satisfactory performance on both normal and wintry road surfaces at the same time.

Since the tread being axially divided into 3 regions, 2 shoulder regions located axially outward of the tread being composed of a shoulder rubber composition and a center region axially sandwiched by the 2 shoulder regions being composed of a center rubber composition different than the shoulder rubber composition and a glass transition temperature Tg of the center rubber composition being higher than a glass transition temperature Tg of the shoulder rubber composition, it is possible to use 2 different rubber compositions suitable for different road surface in particular the normal road surface with the center rubber composition and the wintry road surface with the shoulder rubber composition, thus performance on both the normal road surface and the wintry road surface can be satisfactory simultaneously.

Since the at least one ply comprises a plurality of reinforcing cords extending with an angle A in a range from 35 to 55 degrees relative to circumferential orientation, a shape of a contact patch changes as to have a longer length and a narrower width enabling more center rubber composition in the center region contacts with ground even shoulder regions are occupied by the shoulder rubber composition, performance on normal road surface can be maintained.

Even with such the contact patch shape when driving on wintry road surface especially on snow covered road surface, the tire would compress the snow and initiates contact of the shoulder rubber composition in the shoulder regions with the snow covered road surface by subsiding into the snow, performance on wintry road surface especially on snow covered road surface can be improved.

If this angle A of reinforcing cords is less than 35 degrees or more than 55 degrees relative to circumferential orientation, there is a risk that an increase of the contact length would be insufficient thus performance on normal road surface cannot be maintained. By setting this angle A in the range from 35 to 55 degrees, it is possible to improve performance on wintry surface especially on snow covered road surface while maintaining performance on normal road surface at the same time.

This angle A of the plurality of reinforcing cords is preferably from 40 to 50 degrees relative to circumferential orientation.

Since the glass transition temperature Tg of the center rubber composition is at least equal to 10°C higher than the glass transition temperature Tg of the shoulder rubber composition, it is possible to improve performance on wintry surface especially on snow covered road surface while maintaining performance on normal road surface at the same time.

If this difference of the glass transition temperature Tg between the center rubber composition and the shoulder rubber composition is less than 10°C or the glass transition temperature Tg of the shoulder rubber composition is higher than the glass transition temperature Tg of the center rubber composition, there is a risk that maintenance of performance on normal road surface and/or improvement of performance on wintry road surface is insufficient because of too close glass transition temperature Tg between two rubber compositions. By setting this difference of the glass transition temperature Tg between the center rubber composition and the shoulder rubber composition being at least equal to 10°C, it is possible to improve performance on wintry surface especially on snow covered road surface while maintaining performance on normal road surface at the same time.

This difference of the glass transition temperature Tg between the center rubber composition and the shoulder rubber composition is preferably at least equal to 12°C, more preferably at least equal to 15°C.

In another preferred embodiment, the tread comprises at least 1 groove opening to the contact face and extending continuously in circumferential orientation, and an intersection between the shoulder region and the center region locates in the groove.

According to this arrangement, it is possible to maintain well the performance on normal road surface as the groove supports flattening of the contact face of the tread leading longer, wider and homogeneous contact of the center region with ground.

Preferably the tread comprises at least 2 grooves for leading even better flattening of the contact face.

In another preferred embodiment, the groove containing the intersection between the shoulder region and the center region positions axially in a range from 15 to 35% of the contact width CW from a center of the tread.

If the groove containing the intersection between the shoulder region and the center region position axially less than 15% of the contact width CW from the center of the tread, there is a risk of performance degradation on normal road surface as a contact width of the center region becomes too narrow. If the groove containing the intersection between the shoulder region and the center region position axially more than 35% of the contact width CW from the center of the tread, there is a risk of performance degradation on wintry road surface as a contact width of the shoulder region becomes too narrow. By setting the groove containing the intersection between the shoulder region and the center region position axially in a range from 15 to 35% of the contact width CW from a center of the tread, it is possible to improve performance on wintry road surface while maintaining performance on normal road surface at the same time.

In another preferred embodiment, the tire has 2 plies radially superimposed, the plurality of reinforcing cords in each plies is respectively oriented diagonally and crossed relative to one ply to another ply.

According to this arrangement, it is possible to manufacture the tire of the present invention using a standard manufacturing process without introducing special equipment.

In another preferred embodiment, the glass transition temperature Tg of the center rubber composition is at least equal to -15°C.

If the glass transition temperature Tg of the center rubber composition is lower than - 15°C, there is a risk that performance on normal road surface in particular wet performance provided by the center rubber composition would be degraded. By setting this glass transition temperature Tg of the center rubber composition at least equal to - 15°C, it is possible to provide satisfactory performance on normal road surface in particular wet performance.

In another preferred embodiment, the glass transition temperature Tg of the shoulder rubber composition is at most equal to -25°C.

If the glass transition temperature Tg of the shoulder rubber composition is higher than -25°C, there is a risk that performance on wintry road surface in particular snow performance provided by the shoulder rubber composition would be degraded. By setting this glass transition temperature Tg of the shoulder rubber composition at most equal to -25°C, it is possible to provide satisfactory performance on wintry road surface in particular snow performance.

### Advantageous Effects of Invention

According to the arrangement described above, it is possible to provide satisfactory performance on both normal and wintry road surfaces at the same time.

### Brief Description of Drawings

Other characteristics and advantages of the invention arise from the description made hereafter in reference to the annexed drawings which show, as nonrestrictive examples, the embodiment of the invention.

In these drawings:
[fig.1]Fig. 1 is a schematic cross sectional view of a portion of a tire according to a first embodiment of the present invention;
[fig.2]Fig. 2 is a plan view of a tire according to the first embodiment of the present invention, with parts thereof peeled away to show various layers of the tire;
[fig.3]Fig. 3 is a plan view of a tire according to a second embodiment of the present invention, with parts thereof peeled away to show various layers of the tire;

### Description of Embodiments

Preferred embodiment of the present invention will be described below referring to the drawings.

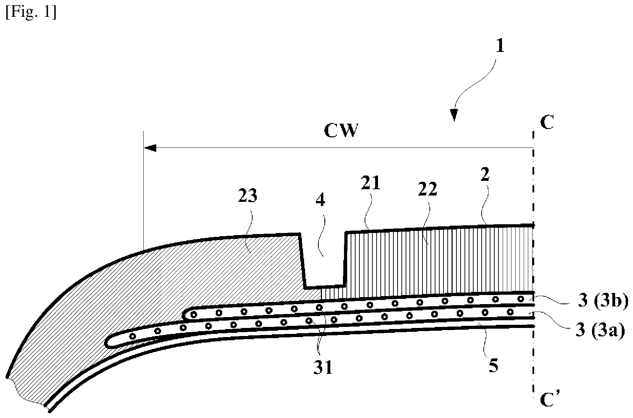

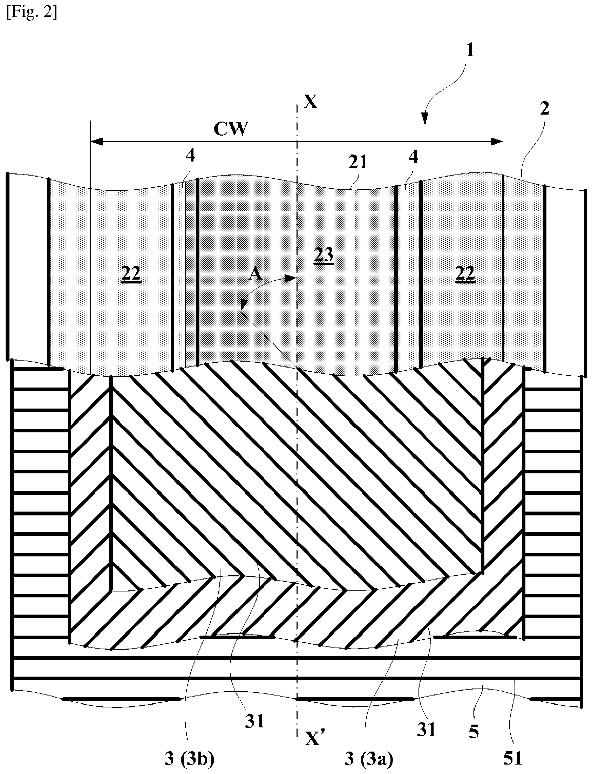

A tire 1 according to a first embodiment of the present invention will be described referring to Figs. 1 and 2.

Fig. 1 is a schematic cross sectional view of a portion of a tire according to a first embodiment of the present invention. Fig. 2 is a plan view of a tire according to the first embodiment of the present invention, with parts thereof peeled away to show various layers of the tire. The tire 1 shown in the Fig. 1 is a half portion of the tire divided with respect to a center line C-C' extending in circumferential orientation and radial orientation (as shown in X-X' in Fig. 2).

The tire 1 is provided with a tread 2 having dimension 205/55R16 and comprises a contact face 21 of a contact width CW intended to come into contact with ground during rolling, one carcass ply 5 placed radially inward of the tread 2 and two plies 3 (3a, 3b) placed radially inbetween the tread 2 and the carcass ply 5. The two plies 3 (3a, 3b) comprise a plurality of reinforcing cords 31 extending with an angle A in a range from 35 to 55 degrees relative to circumferential orientation (shown in Fig. 2).

As shown in Fig. 1 and in Fig. 2, the tread 2 is divided into 3 regions, 2 shoulder regions 22 located axially outward of the tread 2 being composed of a shoulder rubber composition and a center region 23 axially sandwiched by the 2 shoulder regions 22 being composed of a center rubber composition different than the shoulder rubber composition, an intersection between the shoulder region 22 and the center region 23 extends radially, a glass transition temperature Tg of the center rubber composition being higher than a glass transition temperature Tg of the shoulder rubber composition. The glass transition temperature Tg of the center rubber composition is at least equal to 10°C higher than the glass transition temperature Tg of the shoulder rubber composition. The glass transition temperature Tg of the center rubber composition constituting the center region 23 is at least equal to -15°C, and the glass transition temperature Tg of the shoulder rubber composition constituting the shoulder region 22 is at most equal to -25°C. In this first embodiment, the glass transition temperature Tg of the center rubber composition constituting the center region 23 is -10°C, and the glass transition temperature Tg of the shoulder rubber composition constituting the shoulder region 22 is -45°C, thus the glass transition temperature Tg of the center rubber composition is 35°C higher than the glass transition temperature Tg of the shoulder rubber composition.

As shown in Fig. 1 and in Fig. 2, the tread 2 comprises two grooves 4 opening to the contact face 21 and extending continuously in circumferential orientation which is topbottom orientation of Fig. 2, and an intersection between the shoulder region 22 and the center region 23 locates in the groove 4. The groove 4 containing the intersection between the shoulder region 22 and the center region 23, and a center of the groove 4 positions axially in a range from 15 to 35% of the contact width CW from a center of the tread 2. In this first embodiment, the groove 4 containing the intersection between the shoulder region 22 and the center region 23 positions axially 24% of the contact width CW from the center of the tread 2.

As shown in Fig. 2, one carcass ply 5 comprises a plurality of carcass cords 51 extending in axial orientation of the tire 1 which is left-right orientation in this Fig. 2, and 2 plies 3 (3a, 3b) are radially superimposed above the carcass ply 5, and the plurality of reinforcing cords 31 in each plies 3 (3a, 3b) is respectively oriented diagonally and crossed relative to one ply 3 (3a) to another ply 3 (3b) with the angle A. In this first embodiment, this angle A is 45 degrees relative to circumferential orientation.

Since the tread 2 being axially divided into 3 regions, 2 shoulder regions 22 located axially outward of the tread 2 being composed of a shoulder rubber composition and a center region 23 axially sandwiched by the 2 shoulder regions 22 being composed of a center rubber composition different than the shoulder rubber composition and a glass transition temperature Tg of the center rubber composition being higher than a glass transition temperature Tg of the shoulder rubber composition, it is possible to use 2 different rubber compositions suitable for different road surface in particular the normal road surface with the center rubber composition and the wintry road surface with the shoulder rubber composition, thus performance on both the normal road surface and the wintry road surface can be satisfactory simultaneously.

Since the at least one ply 3 comprises a plurality of reinforcing cords 31 extending with an angle A in a range from 35 to 55 degrees relative to circumferential orientation, a shape of a contact patch changes as to have a longer length and a narrower width enabling more center rubber composition in the center region 23 contacts with ground even shoulder regions 22 are occupied by the shoulder rubber composition, performance on normal road surface can be maintained.

Even with such the contact patch shape when driving on wintry road surface especially on snow covered road surface, the tire 1 would compress the snow and initiates contact of the shoulder rubber composition in the shoulder regions 22 with the snow covered road surface by subsiding into the snow, performance on wintry road surface especially on snow covered road surface can be improved.

If this angle A of reinforcing cords 31 is less than 35 degrees or more than 55 degrees relative to circumferential orientation, there is a risk that an increase of the contact length would be insufficient thus performance on normal road surface cannot be maintained. By setting this angle A in the range from 35 to 55 degrees, it is possible to improve performance on wintry surface especially on snow covered road surface while maintaining performance on normal road surface at the same time.

This angle A of the plurality of reinforcing cords 31 is preferably from 40 to 50 degrees relative to circumferential orientation.

Since the glass transition temperature Tg of the center rubber composition is at least equal to 10°C higher than the glass transition temperature Tg of the shoulder rubber composition, it is possible to improve performance on wintry surface especially on snow covered road surface while maintaining performance on normal road surface at the same time.

If this difference of the glass transition temperature Tg between the center rubber composition and the shoulder rubber composition is less than 10°C or the glass transition temperature Tg of the shoulder rubber composition is higher than the glass transition temperature Tg of the center rubber composition, there is a risk that maintenance of performance on normal road surface and/or improvement of performance on wintry road surface is insufficient because of too close glass transition temperature Tg between two rubber compositions.

This difference of the glass transition temperature Tg between the center rubber composition and the shoulder rubber composition is preferably at least equal to 12°C, more preferably at least equal to 15°C.

Since the tread 2 comprises at least 1 groove 4 opening to the contact face 21 and extending continuously in circumferential orientation, and an intersection between the shoulder region 22 and the center region 23 locates in the groove 4, it is possible to maintain well the performance on normal road surface as the groove 4 supports flattening of the contact face 21 of the tread 2 leading longer, wider and homogeneous contact of the center region 23 with ground.

Preferably the tread 2 comprises at least 2 grooves 4 for leading even better flattening of the contact face 21.

Since the groove 4 containing the intersection between the shoulder region 22 and the center region 23 positions axially in a range from 15 to 35% of the contact width CW from a center of the tread 2, it is possible to improve performance on wintry road surface while maintaining performance on normal road surface at the same time.

If the groove 4 containing the intersection between the shoulder region 22 and the center region 23 position axially less than 15% of the contact width CW from the center of the tread 2, there is a risk of performance degradation on normal road surface as a contact width of the center region 23 becomes too narrow. If the groove 4 containing the intersection between the shoulder region 22 and the center region 23 position axially more than 35% of the contact width CW from the center of the tread 2, there is a risk of performance degradation on wintry road surface as a contact width of the shoulder region 22 becomes too narrow.

Since the tire 1 has 2 plies 3 radially superimposed, the plurality of reinforcing cords 31 in each plies 3 is respectively oriented diagonally and crossed relative to one ply to another ply, it is possible to manufacture the tire 1 of the present invention using a standard manufacturing process without introducing special equipment.

Since the glass transition temperature Tg of the center rubber composition is at least equal to -15°C, it is possible to provide satisfactory performance on normal road surface in particular wet performance.

If the glass transition temperature Tg of the center rubber composition is lower than - 15°C, there is a risk that performance on normal road surface in particular wet performance provided by the center rubber composition would be degraded.

Since the glass transition temperature Tg of the shoulder rubber composition is at most equal to -25°C, it is possible to provide satisfactory performance on wintry road surface in particular snow performance.

If the glass transition temperature Tg of the shoulder rubber composition is higher than -25°C, there is a risk that performance on wintry road surface in particular snow performance provided by the shoulder rubber composition would be degraded.

The tread 2 may be provided with grooves other than the groove 4 which may be extending in orientation other than circumferential orientation. The tread 2 may also be provided with a plurality of incisions (sipes) and/or holes. The tread 2 may be provided both with the grooves which may be extending in orientation other than circumferential orientation and the plurality of incisions (sipes) and/or holes.

The groove 4 may be extending in a form of straight (as shown in Fig. 2), waved, zigzagged or combination of these forms. The groove 4 may have periodically different width in axial orientation and/or different depth in radial orientation.

In case plural plies 3 are provided, as for example this first embodiment, the angle A of the reinforcing cord 31 may be the same or different among plies 3.

The carcass cord 51 of the carcass ply 5 may be extending as to have a slight angle with respect to axial orientation, for example within ±10 degrees with respect to axial orientation, and a plural carcass plies 5 may be provided. In case plural carcass plies 5 are provided, the angle of the carcass cord 51 may be the same or different among carcass plies 5.

The tire 1 may be provided with other ply/plies, for example a cap ply/plies placed radially outward of the ply 3 whose cords are extending generally in circumferential orientation, but it is preferable to do not have such the ply/plies. The tire 1 may also be provided with other material typically used in conventional radial pneumatic tire; for example inner liner.

The intersection between the shoulder region 22 and the center region 23 may be extending in straight, wavy or zigzagged manner in circumferential orientation, and may be extending in straight, curved, wavy, zigzagged or inclined manner in radial orientation.

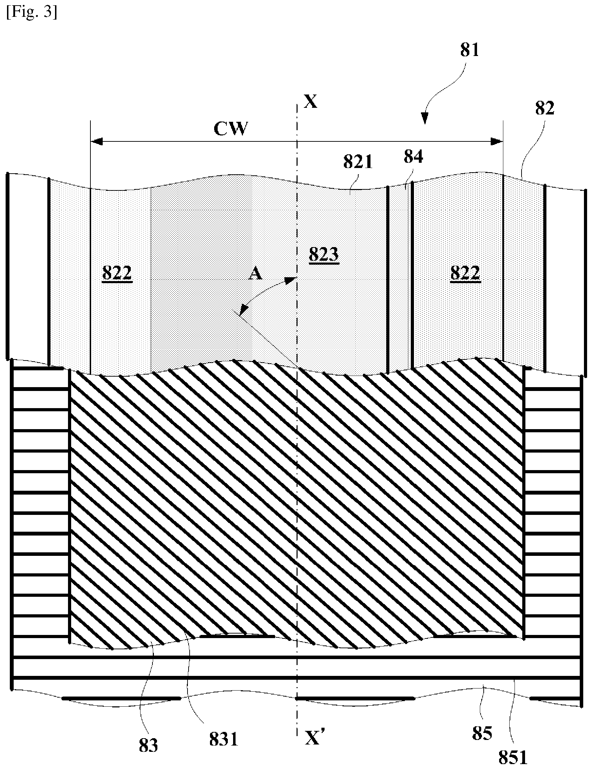

A tire 81 according to a second embodiment of the present invention will be described referring to Fig. 3. Fig. 3 is a plan view of a tire according to a second embodiment of the present invention, with parts thereof peeled away to show various layers of the tire. The construction of this second embodiment is similar to that of the first embodiment other than the arrangement shown in Fig. 3, thus description will be made referring to Fig. 3.

As shown in Fig. 3, a tire 81 is provided with a tread 82 comprises a contact face 821 of a contact width CW intended to come into contact with ground during rolling, one carcass ply 85 comprising a plurality of carcass cords 851 extending in axial orientation of the tire 81 radially inward of the tread 82 and one ply 83 placed radially inbetween the tread 82 and the carcass ply 85. The ply 83 comprises a plurality of reinforcing cords 831 extending with an angle A in a range from 35 to 55 degrees relative to circumferential orientation with a density higher than the ply in the first embodiment. In this second embodiment, the angle A is 48 degrees relative to circumferential orientation.

As shown in Fig. 3, the tread 82 is asymmetrically divided into 3 regions, 2 shoulder regions 822 located axially outward of the tread 82, a right side of the shoulder region 822 is wider than a left side of the shoulder region 822, both being composed of a shoulder rubber composition and a center region 823 axially sandwiched by the 2 shoulder regions 822 being composed of a center rubber composition different than the shoulder rubber composition.

As shown in Fig. 3, the tread 82 comprises one groove 84 opening to the contact face 821 and extending continuously in circumferential orientation, and an intersection between the shoulder region 822 and the center region 823 locates in the groove 84 offset with a center of the groove 84 in a right side of the tread 82, and in a left side the intersection between the shoulder region 822 and the center region 823 locates on the contact face 821.

Since this second embodiment comprises only one ply, it is possible to decrease a weight of the tire 81 which leads improvement of rolling resistance while improving performance on wintry road surface and maintaining performance on normal road surface.

Since this second embodiment is provided with asymmetrical construction in terms of the intersection between the shoulder region 822 and the center region 823 and of availability of the groove 84, it is possible to adapt with an alignment of a vehicle to be fitted especially with a camber angle.

Two shoulder regions 822 may be provided with 2 different rubber compositions while satisfying condition of the glass transition temperature Tg; the glass transition temperature Tg of the center rubber composition constituting the center region 823 is at least equal to 10°C higher than the glass transition temperature Tg of the shoulder rubber composition constituting the shoulder region 822.

The invention is not limited to the examples described and represented but defined by the appended claims.

### Examples

In order to confirm the effect of the present invention, one type of tire of Example to which the present invention is applied and other types of tires of Reference and Comparative Example were prepared.

The Example was a tire as described in the above the first embodiment having the glass transition temperature Tg of the center rubber composition equals to -15°C, the glass transition temperature Tg of the shoulder rubber composition equal to -40°C, the angle A of the reinforcing cords equal to 45 degrees relative to circumferential orientation, two grooves contain the intersection between the center region and the shoulder region which positions at 24% of the contact width CW from the center of the tread. The Example was also provided with a plurality of sipes extending in axial orientation, every 20mm at center region with a width of 0.1mm, and every 3.6mm at shoulder region with a width of 1.2mm. The Reference was a tire whose tread was made from one single rubber composition same as the center rubber composition of the Example and having the angle A of the reinforcing cords equal to 27 degrees relative to circumferential orientation. The Comparative Example was a tire whose tread was made from one single rubber composition same as the center rubber composition of the Example and having the angle A of the reinforcing cords equal to 45 degrees relative to circumferential orientation. The Example, Reference and Comparative Example tires have the same sipes configuration as described above and the same internal construction as typical radial tire construction other than described above.

Wintry road performance tests:
- snow braking:
   Unused test tires were mounted onto all four wheels of a 2,500 cc front-wheel drive vehicle. On a straight path compacted snow surface, braking with ABS (Anti-lock Braking System) was applied at a speed of 50 km/h, distance until 5 km/h was measured.

The results are shown in table. In this table 1, results are represented by an index of 100 for Reference, higher the number indicates better the performance.

Normal road performance tests:
- wet braking:
   Unused test tire was mounted onto a trailer. In accordance with ISO 23671, on a straight path 1mm deep wet surface, braking force was applied to the test tire at a speed of 65km/h and peak µ level was calculated.
- dry braking:
   Unused test tire was mounted onto a trailer. On a straight path asphalt surface, braking force was applied to the test tire at a speed of 65km/h and peak µ level was calculated.

The results are also shown in table. In this table 1, results are represented by an index of 100 for Reference, higher the number indicates better the performance.

**[Table 1]**

| | Example | Comparative Example | Reference |
|---|---|---|---|
| Snow braking performance (index) | 113 | 88 | 100 |
| Wet braking performance (index) | 110 | 111 | 100 |
| Dry braking performance (index) | 98 | 98 | 100 |

As seen from table 1, the Example shows improvement on wintry road surface while maintaining satisfactory performance on normal road surface.

### Reference Signs List

1, 81 tire
2, 82 tread
21, 821 contact face
22, 822 shoulder region
23, 823 center region
3, 3a, 3b, 83 ply
31, 831 reinforcing cord
4, 84 groove
5, 85 carcass ply
51, 851 carcass cord

## Claims

1. A tire (1) comprising a tread (2), at least one carcass ply (5) placed radially inward of the tread (2) and at least one ply (3) placed radially inbetween the tread (2) and the at least one carcass ply (5), the tread (2) having a contact face (21) of a contact width CW intended to come into contact with ground during rolling,
the tread (2) being axially divided into 3 regions, 2 shoulder regions (22) located axially outward of the tread (2) being composed of a shoulder rubber composition and a center region (23) axially sandwiched by the 2 shoulder regions (22) being composed of a center rubber composition different than the shoulder rubber composition, a glass transition temperature Tg of the center rubber composition being higher than a glass transition temperature Tg of the shoulder rubber composition,
**wherein** the glass transition temperature Tg of the center rubber composition is at least equal to 10°C higher than the glass transition temperature Tg of the shoulder rubber composition,
the tire (1) being **characterized in that** the at least one ply (3) comprises a plurality of reinforcing cords (31) extending with an angle A in a range from 35 to 55 degrees relative to a circumferential orientation.

2. The tire (1) according to Claim 1, **wherein** the angle A of the plurality of reinforcing cords (31) is in a range from 40 to 50 degrees relative to circumferential orientation.

3. The tire (1) according to Claim 1 or Claim 2, **wherein** the tread (2) comprises at least 1 groove (4) opening to the contact face (21) and extending continuously in circumferential orientation, and **wherein** an intersection between the shoulder region (22) and the center region (23) is located in the groove (4).

4. The tire (1) according to Claim 3, **wherein** the groove (4) containing the intersection between the shoulder region (22) and the center region (23) is positioned axially in a range from 15 to 35% of the contact width CW from a center of the tread (2).

5. The tire (1) according to Claim 3 or Claim 4, **wherein** the tread (2) comprises at least 2 grooves (4).

6. The tire (1) according to any one of the Claims 1 to 5, **wherein** the tire (1) has 2 plies (3) radially superimposed, the plurality of reinforcing cords (31) in each ply (3) is respectively oriented diagonally and crossed relative to one ply to another ply.

7. The tire (1) according to any one of the Claims 1 to 6, **wherein** the glass transition temperature Tg of the center rubber composition is at least equal to -15°C.

8. The tire (1) according to any one of the Claims 1 to 7, **wherein** the glass transition temperature Tg of the shoulder rubber composition is at most equal to -25°C.

## Patentansprüche

1. Reifen (1), umfassend eine Lauffläche (2), mindestens eine Karkassenlage (5), die von der Lauffläche (2) radial nach innen platziert ist, und mindestens eine Lage (3), die radial zwischen der Lauffläche (2) und der mindestens einen Karkassenlage (5) platziert ist, wobei die Lauffläche (2) eine Kontaktfläche (21) mit einer Kontaktbreite CW aufweist, die dazu bestimmt ist, den Boden beim Rollen zu berühren,
wobei die Lauffläche (2) axial in drei Bereiche unterteilt ist, zwei Schulterbereiche (22), die von der Lauffläche (2) axial nach außen angeordnet sind und aus einer Schulterkautschukzusammensetzung bestehen, und einen Mittelbereich (23), der axial zwischen den zwei Schulterbereichen (22) angeordnet ist und aus einer Mittelkautschukzusammensetzung besteht, die sich von der Schulterkautschukzusammensetzung unterscheidet, wobei die Glasübergangstemperatur Tg der Mittelkautschukzusammensetzung höher ist als die Glasübergangstemperatur Tg der Schulterkautschukzusammensetzung,
wobei die Glasübergangstemperatur Tg der Mittelkautschukzusammensetzung mindestens 10 °C höher ist als die Glasübergangstemperatur Tg der Schulterkautschukzusammensetzung,
wobei der Reifen (1) **dadurch gekennzeichnet ist, dass** die mindestens eine Lage (3) mehrere Verstärkungssehnen (31) umfasst, die sich in einem Winkel A im Bereich von 35 bis 55 Grad in Bezug zu einer Umfangsrichtung erstrecken.

2. Reifen (1) nach Anspruch 1, wobei der Winkel A der mehreren Verstärkungssehnen (31) in einem Bereich von 40 bis 50 Grad in Bezug zur Umfangsrichtung liegt.

3. Reifen (1) nach Anspruch 1 oder Anspruch 2, wobei die Lauffläche (2) mindestens eine Nut (4) umfasst, die sich zur Kontaktfläche (21) hin öffnet und sich in Umfangsrichtung durchgehend erstreckt, und wobei eine Schnittstelle zwischen dem Schulterbereich (22) und dem Mittelbereich (23) in der Nut (4) angeordnet ist.

4. Reifen (1) nach Anspruch 3, wobei die Nut (4), die die Schnittstelle zwischen dem Schulterbereich (22) und dem Mittelbereich (23) enthält, axial in einem Bereich von 15 bis 35 % der Kontaktbreite CW von der Mitte der Lauffläche (2) positioniert ist.

5. Reifen (1) nach Anspruch 3 oder Anspruch 4, wobei die Lauffläche (2) mindestens zwei Nuten (4) umfasst.

6. Reifen (1) nach einem der Ansprüche 1 bis 5, wobei der Reifen (1) zwei Lagen (3) aufweist, die radial übereinanderliegen, wobei die mehreren Verstärkungssehnen (31) in jeder Lage (3) jeweils diagonal ausgerichtet sind und sich von einer Lage zur anderen Lage überkreuzen.

7. Reifen (1) nach einem der Ansprüche 1 bis 6, wobei die Glasübergangstemperatur Tg der Mittelkautschukzusammensetzung mindestens gleich -15 °C beträgt.

8. Reifen (1) nach einem der Ansprüche 1 bis 7, wobei die Glasübergangstemperatur Tg der Schulterkautschukzusammensetzung höchstens gleich -25 °C beträgt.

## Revendications

1. Pneumatique (1) comprenant une bande de roulement (2), au moins une nappe de carcasse (5) disposée radialement vers l'intérieur de la bande de roulement (2) et au moins une nappe (3) disposée radialement entre la bande de roulement (2) et l'au moins une nappe de carcasse (5), la bande de roulement (2) ayant une face de contact (21) d'une largeur de contact CW destinée à entrer en contact avec le sol pendant le roulage,
la bande de roulement (2) étant divisée axialement en trois régions, deux régions d'épaulement (22) situées axialement vers l'extérieur de la bande de roulement (2) étant composées d'une composition de caoutchouc d'épaulement et une région centrale (23) prise en sandwich axialement par les deux régions d'épaulement (22) étant composée d'une composition de caoutchouc centrale différente de la composition de caoutchouc d'épaulement, une température de transition vitreuse Tg de la composition de caoutchouc centrale étant plus élevée qu'une température de transition vitreuse Tg de la composition de caoutchouc d'épaulement,
la température de transition vitreuse Tg de la composition de caoutchouc centrale étant au moins égale à 10 °C de plus que la température de transition vitreuse Tg de la composition de caoutchouc d'épaulement,
le pneumatique (1) étant **caractérisé en ce que** l'au moins une nappe (3) comprend une pluralité de câbles de renforcement (31) s'étendant avec un angle A dans une plage comprise entre 35 et 55 degrés par rapport à une orientation circonférentielle.

2. Pneumatique (1) selon la revendication 1, l'angle A de la pluralité de câbles de renforcement (31) étant dans une plage comprise entre 40 et 50 degrés par rapport à une orientation circonférentielle.

3. Pneumatique (1) selon la revendication 1 ou la revendication 2, la bande de roulement (2) comprenant au moins une rainure (4) s'ouvrant sur la face de contact (21) et s'étendant continuellement dans une orientation circonférentielle, et une intersection entre la région d'épaulement (22) et la région centrale (23) étant située dans la rainure (4).

4. Pneumatique (1) selon la revendication 3, la rainure (4) contenant l'intersection entre la région d'épaulement (22) et la région centrale (23) étant positionnée axialement dans une plage comprise entre 15 et 35 % de la largeur de contact CW à partir d'un centre de la bande de roulement (2).

5. Pneumatique (1) selon la revendication 3 ou la revendication 4, la bande de roulement (2) comprenant au moins deux rainures (4).

6. Pneumatique (1) selon l'une quelconque des revendications 1 à 5, le pneumatique (1) comprenant deux nappes (3) radialement superposées, la pluralité de câbles de renforcement (31) dans chaque nappe (3) étant respectivement orientée en diagonale et croisée, une nappe par rapport à une autre nappe.

7. Pneumatique (1) selon l'une quelconque des revendications 1 à 6, la température de transition vitreuse Tg de la composition de caoutchouc centrale étant au moins égale à -15 °C.

8. Pneumatique (1) selon l'une quelconque des revendications 1 à 7, la température de transition vitreuse Tg de la composition de caoutchouc d'épaulement étant au plus égale à -25 °C.
